# FASCICULE DE BREVET EUROPEEN

(11) **EP 1 732 977 B1**
(45) Date de publication et mention de la délivrance du brevet: **18.06.2008**
(21) Numéro de dépôt: 05739691.3
(22) Date de dépôt: 16.03.2005
(51) Int. Cl.: C08J 9/14

(54) **COMPOSITION NON INFLAMMABLE ET SON UTILISATION**
NICHT ENTFLAMMBARE ZUSAMMENSETZUNG UND VERWENDUNG DAVON
NON-FLAMMABLE COMPOSITION AND USE THEREOF

(30) Priorité: 06.04.2004 FR 0403591
(43) Date de publication de la demande: 20.12.2006
(73) Titulaire: ARKEMA FRANCE, 92700 Colombes (FR)
(72) Inventeur: CARON, Laurent, F-69110 Sainte Foy Les Lyon (FR)
(74) Mandataire: Dang, Doris
(86) Numéro de dépôt international: PCT/FR2005/000629
(87) Numéro de publication internationale: WO 2005/108478

(56) Documents cités:
- WO-A-02/099006
- US-A1- 2003 234 380

## Description

La présente invention concerne des compositions utilisables comme agent d'expansion dans la fabrication des polymères thermodurcissables. Elle a plus particulièrement pour objet des compositions comprenant du 1,1,1,3,3-pentafluorobutane (365 mfc), du trans-1,2 dichloroéthylène et au moins un hydrofluorocarbure non inflammable et leur utilisation.

Il est connu d'utiliser le 1,1,1,3,3-pentafluorobutane comme agent d'expansion dans la fabrication des mousses, par exemple des mousses de polyuréthane ou de polyisocyanurate.

Pour améliorer les propriétés isolantes des mousses rigides de polyuréthane ou de polyisocyanurate, le document US 6451867 enseigne l'emploi d'un mélange binaire contenant du 1,1,1,3,3-pentafluorobutane et du 1,1,1,3,3-pentafluoropropane ( 245 fa ) comme agent d'expansion.

Par ailleurs, le document WO 02/099006 divulgue un mélange ternaire contenant du 1,1,1,3,3-pentafluorobutane, du 1,1,1,3,3-pentafluoropropane ( 245 fa )et d'environ 23% en poids de trans-1,2 dichloroéthylène. Ce mélange, selon l'enseignement du document WO 02/099006, a l'avantage de présenter pour un rapport constant de 365 mfc / 245 fa un point d'ébullition relativement constant, c'est à dire qui varie très peu avec la quantité de trans-1,2 dichloroéthylène entrant dans la composition du mélange.

Les méthodes de fabrication de mousses de polyuréthane ou de polyisocyanurate sont généralement connues et consistent en général à faire réagir un polyisocyanate organique (incluant le diisocyanate) avec un polyol ou un mélange de polyols en présence d'un agent d'expansion.

La réaction entre un polyisocyanate et un polyol ou un mélange de polyols peut être activée à l'aide d'une amine et/ou d'autres catalyseurs et des agents tensioactifs.

Dans beaucoup d'applications, les composants des mousses de polyuréthane ou polyisocyanurate sont des prémélanges. Plus généralement, la formulation des mousses est prémélangée en deux composants. Le premier composant, plus connu sous la dénomination « composant A » comprend la composition isocyanate ou polyisocyanate. Le deuxième composant, plus connu sous la dénomination « composant B » comprend le polyol ou le mélange de polyols, l'agent tensio-actif, le ou les catalyseur(s), le ou les agent(s) d'expansion.

Le composant B pose des problèmes d'inflammabilité, même lorsque l'agent d'expansion entrant dans la composition du prémélange est non inflammable.

En outre, les problèmes d'élévation de pression des conteneurs renfermant le composant B sont souvent rencontrés lors de leur stockage.

La présente invention fournit donc des compositions qui permettent de résoudre tout ou en partie les problèmes précités.

Un premier objet de la présente invention concerne des compositions comprenant de 5 à 74 % en poids du 1,1,1,3,3-pentafluorobutane (365 mfc), de 24 à 93 % en poids du trans-1,2 dichloroéthylène et de 2 à 46 % en poids du 1,1,1,3,3-pentafluoropropane (245 fa).

Les compositions selon la présente invention comprennent de préférence de 8 à 61 % en poids de 365 mfc, de 24 à 46 % en poids de trans-1,2 dichloroéthylène et de 15 à 46 % en poids du 1,1,1,3,3-pentafluoropropane (245 fa).

Les compositions selon la présente invention comprennent avantageusement de 14 à 60 % en poids de 365 mfc, de 25 à 40 % en poids de trans-1,2 dichloroéthylène et de 15 à 46 % en poids du 1,1,1,3,3-pentafluoropropane (245 fa).

Les compositions comprenant de 5 à 25 % en poids de 365 mfc, de 65 à 90 % en poids de trans-1,2 dichloroéthylène et de 5 à 20 % en poids de 245 fa sont intéressantes.

Les compositions selon le premier objet de l'invention peuvent comprendre en outre du 1,1,1,2,3,3,3-heptafluoropropane (227ea).

Les compositions selon la présente invention ne présentent pas de point éclair dans les conditions standard de détermination (norme ASTM D 3828). Elles peuvent être utilisées comme agent d'expansion dans la fabrication des mousses de polymères thermodurcissables comme par exemple les condensats de phenol/formol ou le polyurethane. Elles conviennent tout particulièrement à la fabrication de mousses de polyuréthanne ou de polyisocyanurate.

Un deuxième objet de la présente invention est un agent d'expansion caractérisé en ce qu'il est constitué d'une composition selon le premier objet.

Un troisième objet de la présente invention est une composition comprenant un polyol ou un mélange de polyols et un agent d'expansion selon le deuxième objet.

Comme polyols, on peut citer notamment le glycérol, l'éthylène glycol, le triméthylolpropane,le pentaérythritol, les polyétherpolyols, par exemple ceux obtenus par condensation d'un oxyde d'alkylène ou d'un mélange d'oxydes d'alkylène avec le glycérol, l'éthylène glycol, le triméthylolpropane, le pentaérythritol, les polyesterspolyols, par exemple ceux obtenus d'acides polycarboxyliques,notamment l'acide oxalique, l'acide malonique, l'acide succinique, l'acide adipique, l'acide maléïque, l'acide fumarique, l'acide isophtalique, l'acide téréphtalique, avec le glycérol, l'éthylène glycol, le triméthylolpropane,le pentaérythritol.

Les polyétherpolyols obtenus par addition d'oxydes d'alkylènes, en particulier l'oxyde d'éthylène et/ou l'oxyde de propylène, sur les amines aromatiques en particulier le mélange de 2,4 et 2,6 de toluène diamine conviennent également.

La composition selon le troisième objet de la présente invention comprend, de préférence, de 1 à 60 parties en poids d'agent d'expansion selon le deuxième objet pour 100 parties en poids de polyol ou mélange de polyols. Avantageusement, elle comprend de 5 à 35 parties en poids d'agent d'expansion pour 100 parties en poids de polyol ou mélange de polyols.

Une composition tout particulièrement préférée de la présente invention comprend 5 à 35 parties en poids d'agent d'expansion constitué de 8 à 61 % en poids de 365 mfc, de 24 à 46 % en poids de trans-1,2 dichloroéthylène et de 15 à 46 % en poids du 1,1,1,3,3-pentafluoropropane (245 fa) pour 100 parties en poids de polyol ou mélange de polyols. La composition particulièrement préférée peut comprendre du 1,1,1,2,3,3,3-heptafluoropropane (227ea).

Une composition avantageusement préférée de la présente invention comprend 5 à 35 parties en poids d'agent d'expansion constitué de 14 à 60 % en poids de 365 mfc, de 25 à 46 % en poids de trans-1,2 dichloroéthylène et de 15 à 46 % en poids du 1,1,1,3,3-pentafluoropropane(245 fa) pour 100 parties en poids de polyol ou mélange de polyols. La composition avantageusement préférée peut comprendre du 1,1,1,2,3,3,3-heptafluoropropane (227ea).

Une composition comprenant de 5 à 35 parties en poids d'agent d'expansion constitué de 5 à 25 % en poids de 365 mfc, de 65 à 90 % en poids de trans-1,2 dichloroéthylène et de 5 à 20 % en poids de 245 fa est également intéressante. Cette composition peut comprendre du 227 ea.

La composition selon le troisième objet de la présente invention peut comprendre en outre d'autre agent(s) d'expansion, d'un agent tensio-actif,et d'un ou plusieurs catalyseur(s).

De préférence, la composition selon le troisième objet de la présente invention a l'avantage de ne pas présenter de point éclair dans la gamme de température d'utilisation ( -30 à 61 °C).

La présente invention a pour quatrième objet un procédé de fabrication de mousses de polyuréthane ou polyisocyanurate selon lequel on fait réagir un polyisocyanate organique (incluant le diisocyanate) avec un polyol ou un mélange de polyols en présence d'un agent d'expansion selon le deuxième objet.

Avantageusement, le procédé consiste à faire réagir une composition selon le troisième objet de l'invention avec un polyisocyanate organique, éventuellement sous forme de prémélange.

Comme polyisocyanate, on peut citer notamment les polyisocyanates aliphatiques avec un groupement hydrocarboné pouvant aller jusqu'à 18 atomes de carbone, les polyisocyanates cycloaliphatiques avec un groupement hydrocarboné pouvant aller jusqu'à 15 atomes de carbone, les polyisocyanates aromatiques avec un groupement hydrocarboné aromatique ayant de 6 à 15 atomes de carbone et les polyisocyanates arylaliphatiques avec un groupement hydrocarboné arylaliphatique ayant de 8 à 15 atomes de carbone.

Les polyisocyanates préférés sont le diisocyanato-2,4 et 2,6 toluyle, le diisocyanate de diphénylméthane, l'isocyanate de polyméthylènepolyphényle et leur mélange. Les polyisocyanates modifiés, tels que ceux contenant des groupements carbodiimides, des groupements uréthanes, des groupements isocyanurates, des groupements urée ou des groupements biurée peuvent également convenir.

Les compositions selon le premier objet de la présente invention peuvent également être utilisées comme solvants, aérosols et/ou réfrigérants.

### EXEMPLES

On prépare quatre compositions d'agent d'expansion (essais 1-4 ) selon la présente invention .Puis on mélange 5 parties en poids de chaque composition avec 100 parties en poids de polyol STEPANPOL PS2412 (un polyol de type polyester ). Ensuite on détermine le point éclair de chaque mélange dans la gamme de température - 30 à 61°C dans les conditions standards ( norme ASTM D3828 ).

A titre de comparaison, on prépare une composition (essai 5) non conforme à l'invention.

Les résultats pour chaque essai sont reportés dans le tableau ci-après.

| Essai | Composition de l'agent d'expansion en % poids | | | Ratio 365mfc/245fa | Point éclair (°C) |
|---|---|---|---|---|---|
| | 365mfc | Trans | 245fa | | |
| 1 | 33 | 34 | 33 | 1 | >61 |
| 2 | 30 | 25 | 45 | 2/3 | >61 |
| 3 | 30 | 45 | 25 | 1,2 | >61 |
| 4 | 50 | 25 | 25 | 2 | >61 |
| 5 | 70 | 20 | 10 | 7 | 55 |

## Revendications

1. Composition comprenant de 5 à 74 % en poids du 1,1,1,3,3-pentafluorobutane (365 mfc), de 24 à 93 % en poids du trans-1,2 dichloroéthylène et de 2 à 46 % en poids du 1,1,1,3,3-pentafluoropropane (245 fa ).

2. Composition selon la revendication 1 **caractérisée en ce qu'**elle comprend de 8 à 61 % en poids de 365 mfc, de 24 à 46 % en poids de trans-1,2 dichloroéthylène et de 15 à 46 % en poids du 1,1,1,3,3-pentafluoropropane (245 fa).

3. Composition selon la revendication 1 ou 2 **caractérisés en ce qu'**elle comprend de 14 à 60 % en poids de 365 mfc, de 25 à 40 % en poids de trans-1,2 dichloroéthylène et de 15 à 46 % en poids du 1,1,1,3,3-pentafluoropropane (245 fa).

4. Composition selon la revendication 1 **caractérisée en ce qu'**elle comprend de 5 à 25 % en poids de 365 mfc, de 65 à 90 % en poids de trans-1,2 dichloroéthylène et de 5 à 20 % en poids de 245 fa.

5. Composition selon l'une quelconque des revendications précédentes **caractérisée en ce qu'**elle comprend du 1,1,1,2,3,3,3-heptafluoropropane (227ea).

6. Agent d'expansion **caractérisé en ce qu'**il est consitué d'une composition selon l'une des revendications précédentes.

7. Composition **caractérisée en ce qu'**elle comprend un polyol ou un mélange de polyols et un agent d'expansion selon la revendication 6.

8. Procédé de fabrication de mousses de polymères thermodurcissables **caractérisé en ce que** l'on utilise un agent d'expansion selon la revendication 6.

9. Composition selon l'une quelconque des revendications 1 à 5 **caractérisée en ce qu'**elle est utilisée comme solvants, aérosols et/ou réfrigérants.

## Claims

1. Composition comprising from 5 to 74% by weight of 1,1,1,3,3-pentafluorobutane (365mfc), from 24 to 93% by weight of trans-1,2-dichloroethylene and from 2 to 46% by weight or 1,1,1,3,3-pentafluoropropane (245fa).

2. Composition according to Claim 1, **characterized in that** it comprises from 8 to 61% by weight of 365mfc, from 24 to 46% by weight of trans-1,2-dichloroethylene and from 15 to 46% by weight of 1,1,1,3,3-pentafluoropropane (245fa).

3. Composition according to Claim 1 or 2, **characterized in that** it comprises from 14 to 60% by weight of 365mfc, from 25 to 40% by weight of trans-1,2-dichloroethylene and from 15 to 46% by weight of 1,1,1,3,3-pentafluoropropane (245fa).

4. Composition according to Claim 1, **characterized in that** it comprises from 5 to 25% by weight of 365mfc, from 65 to 90% by weight of trans-1,2-dichloroethylene and from 5 to 20% by weight of 245fa.

5. Composition according to any one of the preceding claims, **characterized in that** it comprises 1,1,1,2,3,3,3-heptafluoropropane (227ea).

6. Expanding agent, **characterised in that** it is composed of a composition according to one of the preceding claims.

7. Composition, **characterized in that** it comprises a polyol or a mixture of polyols, and an expanding agent according to Claim 6.

8. Process for the manufacture of thermosetting polymer foams, **characterized in that** use is made of an expanding agent according to Claim 6.

9. Composition according to any one of Claims 1 to 5, **characterized in that** it is used as solvents, aerosols and/or refrigerants.

## Patentansprüche

1. Zusammensetzung, die 5 bis 74 Gew.-% 1,1,1,3,3-Pentafluorbutan (365 mfc), 24 bis 93 Gew.-% trans-1,2-Dichlorethylen und 2 bis 46 Gew.-% 1,1,1,3,3,-Pentafluorpropan (245 fa) enthält.

2. Zusammensetzung nach Anspruch 1, **dadurch gekennzeichnet, dass** sie 8 bis 61 Gew.-% 365 mfc, 24 bis 46 Gew.-% trans-1,2-Dichlorethylen und 15 bis 46 Gew.-% 1,1,1,3,3,Pentafluorpropan (245 fa) enthält.

3. Zusammensetzung nach Anspruch 1 oder 2, **dadurch gekennzeichnet, dass** sie 14 bis 60 Gew.-% 365 mfc, 25 bis 40 Gew.-% trans-1,2-Dichlorethylen und 15 bis 36 Gew.-% 1,1,1,3,3-Pentafluorpropan (245 fa) enthält.

4. Zusammensetzung nach Anspruch 1, **dadurch gekennzeichnet, dass** sie 5 bis 25 Gew.-% 365 mfc, 65 bis 90 Gew.-% trans-1,2-Dichlorethylen und 5 bis 20 Gew.-% 245 fa enthält.

5. Zusammensetzung nach einem der vorhergehenden Ansprüche, **dadurch gekennzeichnet, dass** sie 1,1,1,2,3,3,3-Heptafluorpropan (277 ea) enthält.

6. Treibmittel, **dadurch gekennzeichnet, dass** es aus einer Zusammensetzung nach einem der vorhergehenden Ansprüche besteht.

7. Zusammensetzung, **dadurch gekennzeichnet, dass** sie ein Polyol oder ein Gemisch von Polyolen und ein Treibmittel nach Anspruch 6 enthält.

8. Verfahren zur Herstellung von Schäumen aus duroplastischen Polymeren, **dadurch gekennzeichnet, dass** ein Treibmittel nach Anspruch 6 verwendet wird.

9. Zusammensetzung nach einem der Ansprüche 1 bis 5, **dadurch gekennzeichnet, dass** sie als Lösungsmittel, für Aerosole und/oder als Kühlmittel verwendet wird.
